# EUROPEAN PATENT SPECIFICATION

(11) **EP 1 862 054 B1**
(45) Date of publication and mention of the grant of the patent: **22.04.2009**
(21) Application number: 07108891.8
(22) Date of filing: 24.05.2007
(51) Int. Cl.: A01D 34/81, A01D 75/20

(54) **Tractor for gardening with stiff guards for movable mechanical parts**
Traktor zur Gartenarbeit mit starren Schutzvorrichtungen für bewegliche mechanische Teile
Tracteur pour jardinage doté de protections rigides pour les pièces mécaniques mobiles

(30) Priority: 30.05.2006 IT MI20060192 U
(43) Date of publication of application: 05.12.2007
(73) Proprietor: GGP Italy S.p.A., 31033 Castelfranco Veneto (TV) (IT)
(72) Inventor: Tosato, Pierluigi, 37128 Verona (IT)
(74) Representative: Mittler, Enrico

(56) References cited:
- US-A- 4 589 249
- US-A- 4 930 298
- US-A- 5 860 272
- US-A1- 2004 011 013

## Description

The present invention relates to a tractor for gardening with stiff guards for movable mechanical parts.

A tractor for gardening has very small dimensions compared with traditional farm tractors, but nevertheless has significant mechanical complexity due to the functions that it has to perform.

The mechanical members for the traction of the tractor and those for moving the cutting means can be distinguished.

Tractors for gardening above all perform the function of lawn mowers for grounds that are too large and not sufficiently regular to be mown by common lawn mowers.

Said mechanical members are situated above all in the lower part of the tractor and have rotating parts and parts provided with other movements like the drive belt for driving the traction/distribution unit and the drive belt for driving the rotating blades.

Tractors for gardening are known having flexible baffles to limit the risk that the operator may inadvertently touch above all the rotating parts, or to prevent third parties other than the operator or hazardous external elements such as sticks, pieces of metal, stones, etc being able to interfere with said rotating parts.

Usually, wide portions of the aforesaid belts are in view and are easily reachable from the exterior.

Guards for tractor are shown in US 4589249, US 2004/011013, US 5860272 and US 4930298.

The object of the present invention is to make a tractor for gardening in which the movable mechanical parts are not accidentally accessible from the exterior, for example by the operator or by third parties.

According to the invention this object is achieved with a tractor for gardening, as disclosed in claim 1.

These and other features of the present invention will be made clearer from the following detailed description of a practical embodiment thereof illustrated by way of non-limiting example in the attached drawings in which:

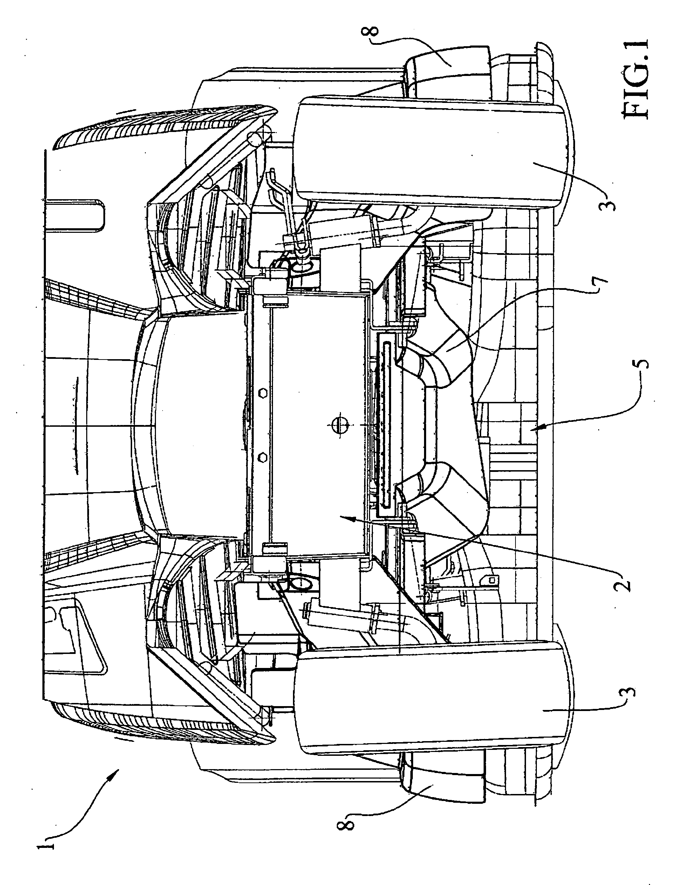

figure 1 shows a front view of a tractor according to the present invention;

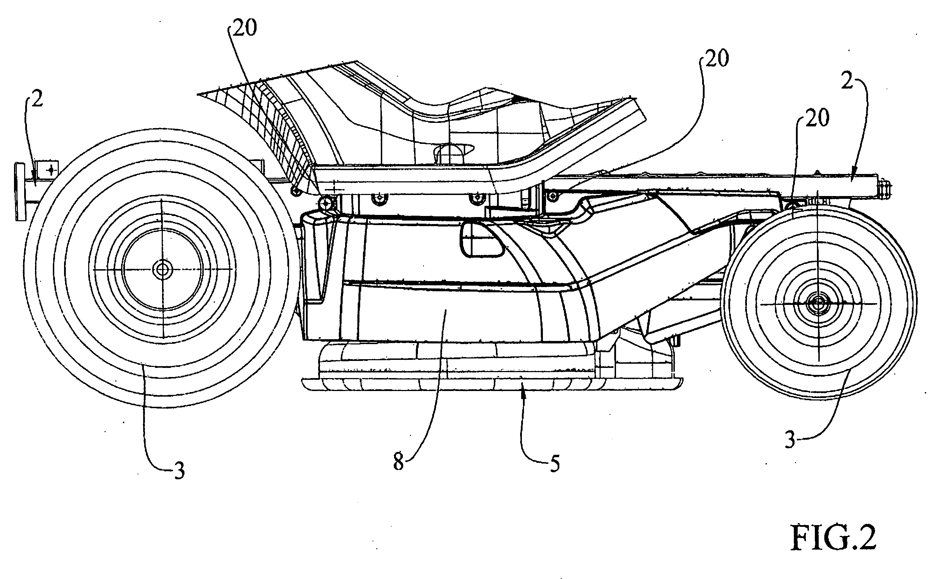

figure 2 shows a side view of the tractor;

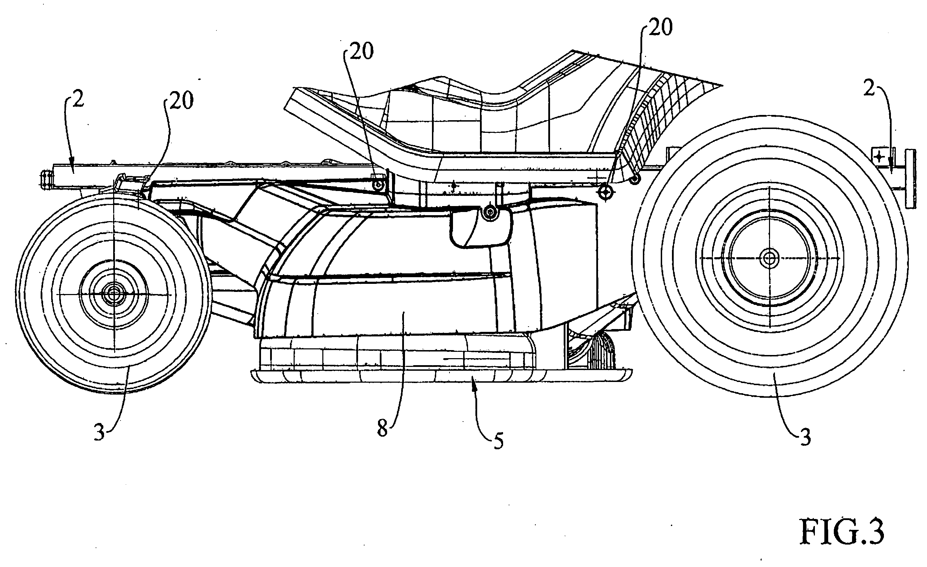

figure 3 shows a further side view of the tractor;

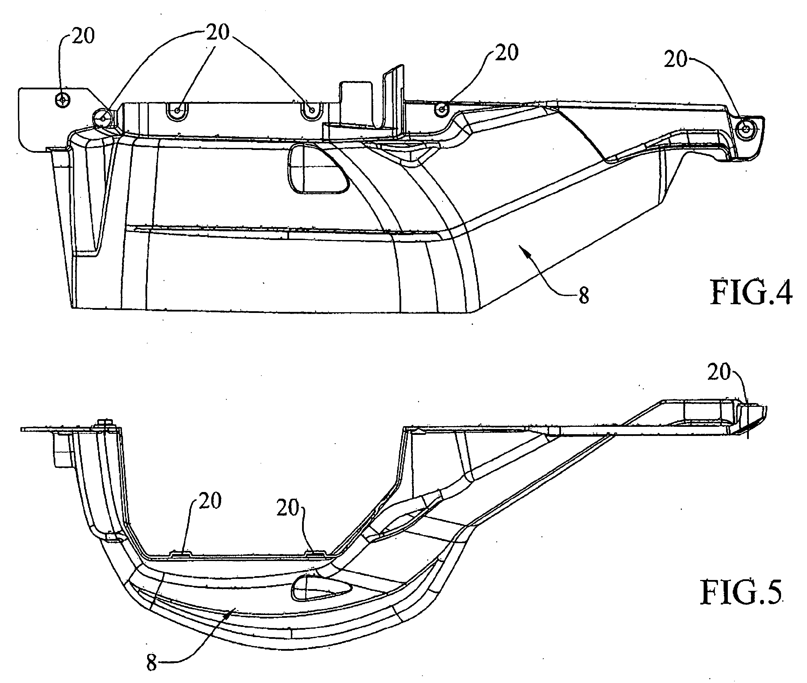

figure 4 shows a side view of a side guard;
figure 5 shows a plan view from above of the side guard in figure 4;

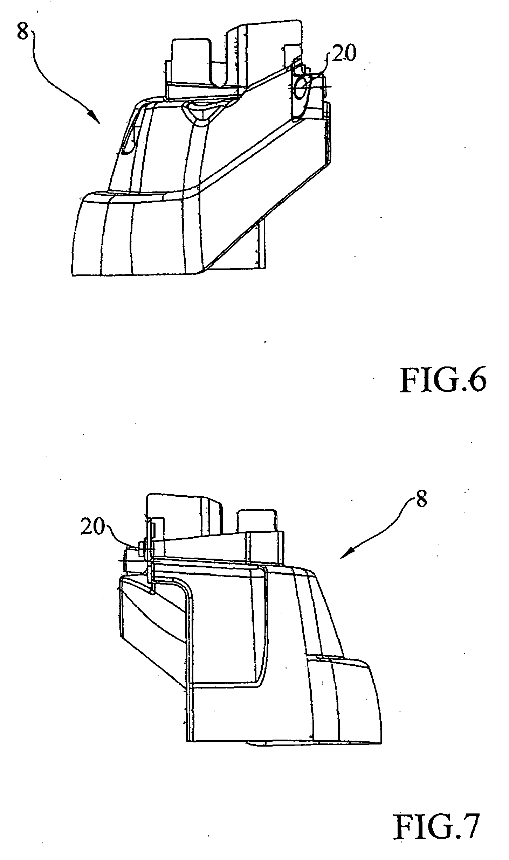

figure 6 shows a front view of the side guard in figure 4;
figure 7 shows a rear view of the side guard in figure 4;

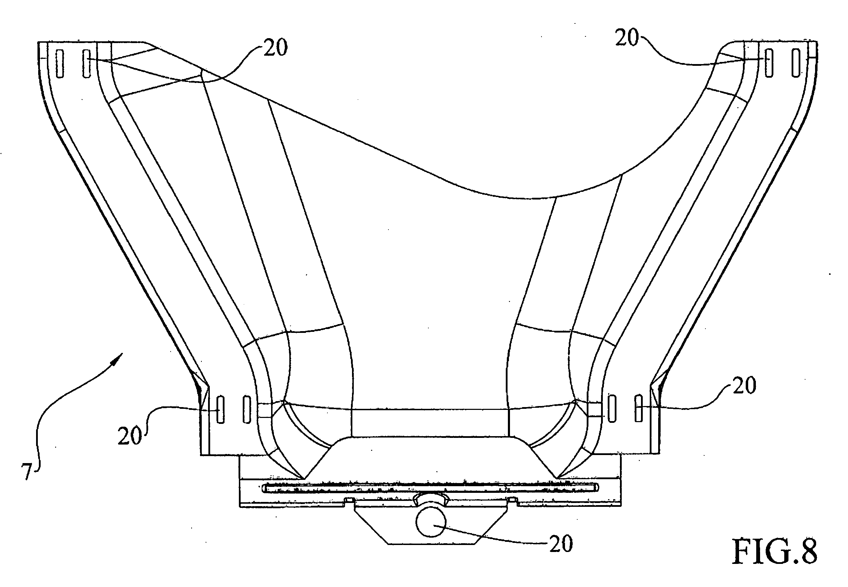

figure 8 shows a plan view from below of a front guard of a tractor according to the present invention;

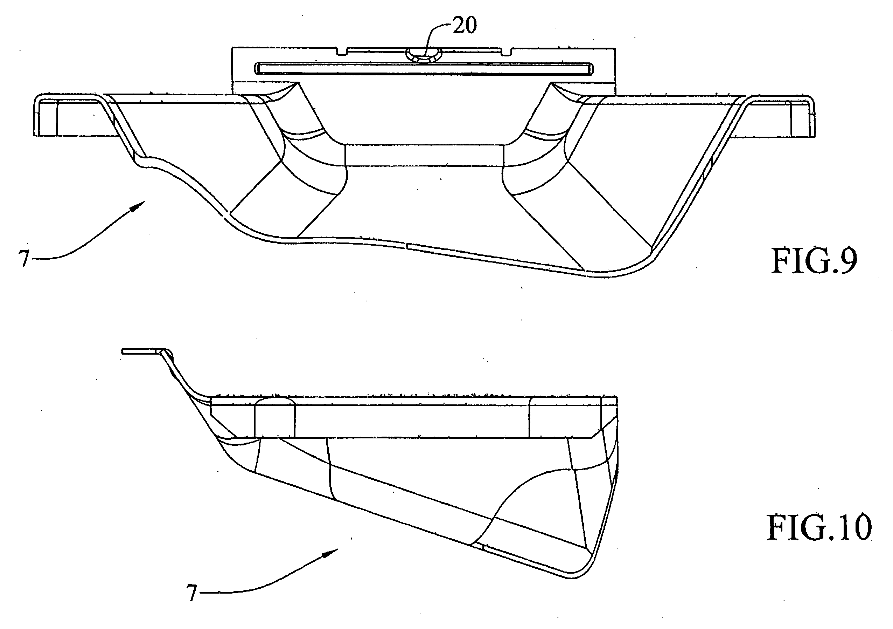

figure 9 shows a front view of the front guard in figure 8;
figure 10 shows a side view of the front guard in figure 8.

A tractor for gardening 1 comprises a supporting frame 2, movement wheels 3 and mechanical means suitable for moving the tractor and transmitting motion to the cutting blade 5.

Said mechanical means comprises movable mechanical parts such as, for example, the drive belt for driving the traction/distribution unit and the drive belt for driving the cutting blade contained in the movable cutting body 5.

Said movable parts are covered by a stiff front guard 7 and by two side guards 8.

From the figures it can be seen that no movable part is visible, they being covered by the stiff guards 7-8.

The stiff nature of the guards 7-8, in polypropylene ensures that the operator and third parties other than the operator can work in safety and that said movable parts are guarded.

The guards 7-8 are fixed to the supporting frame 2 by screw connecting means 20, the front guard 7 being further fixed by front lifting-lever clips (not shown) that are integral with the cutting body 5, enabling the movement of the latter to be followed.

The side guards 8 leave the height adjustment of the cutting body 5 free, whilst ensuring the inaccessibility thereof.

The front guard 7 has in particular the object of preventing access to the front zone near the motor pulley.

The stiff guards 7-8 are made with a shape that is suitable for completely covering said movable parts, said shape being able to vary according to the type of tractor.

If necessary, a rear stiff guard can be also be provided that is completely similar to the one disclosed above.

The hooking systems can also vary.

Said stiff guards 7-8 are replaceable as they can be accidentally damaged during the tractor operating step.

The stiff guards can be made as one piece with the supporting frame 2.

## Claims

1. Tractor for gardening comprising stiff guards (7, 8) per movable parts, said movable parts comprise mechanical components useful for moving the tractor and the cutting means thereof, said stiff guards (7, 8) comprise side guards (8) fixed to the supporting frame (2) of the tractor and a front guard (7) further fixed to lifting levers of a cutting body thus allowing said front guard (7) to follow the movement of the cutting body (5), said side guards (8) leave the height adjustment of the cutting body (5) free, whilst ensuring the inaccessibility thereof.

2. Tractor according to claim 1, **characterized in that** said movable components comprise driven belt components.

3. Tractor according to claim 2, **characterized in that** it comprises stiff guards (7-8) for at least a drive belt transmitting movement to the distribution unit for the traction of the tractor.

4. Tractor according to any one of claims 2 or 3, **characterized in that** it comprises stiff guards (7-8) for at least a drive belt for driving the cutting means.

5. Tractor according to any preceding claim, **characterized in that** it comprises replaceable stiff guards (7-8).

6. Tractor according to any preceding claim, **characterized in that** it comprises stiff guards (7-8) in polypropylene.

7. Tractor according to any preceding claim, **characterized in that** it comprises a rear stiff guard.

## Patentansprüche

1. Traktor zur Gartenarbeit, der starre Schutzvorrichtungen (7,8) pro beweglicher Teile aufweist, wobei die beweglichen Teile mechanische Komponenten aufweisen, die nützlich für die Bewegung des Traktors und der Schneidemittel davon sind, wobei die starren Schutzvorrichtungen (7,8) seitliche Schutzvorrichtungen (8) aufweisen, die an dem Tragrahmen (2) des Traktors befestigt sind, und eine vorderseitige Schutzvorrichtung (7), die des Weiteren an Aufzughebeln eines Schneidekörpers (5) befestigt ist und was somit der vorderseitigen Schutzvorrichtung (7) ermöglicht, der Bewegung des Schneidekörpers (5) zu folgen, wobei die seitlichen Schutzvorrichtungen (8) die Höhenanpassung des Schneidekörpers freilassen, während sie die Unzugänglichkeit davon sicherstellen.

2. Traktor gemäß Anspruch 1, **dadurch gekennzeichnet, dass** die beweglichen Komponenten angetriebene Riemenkomponenten aufweisen.

3. Traktor gemäß Anspruch 2, **dadurch gekennzeichnet, dass** er starre Schutzvorrichtungen (7-8) für mindestens einen Antriebsriemen, der eine Bewegung zu der Verteilereinheit für die Traktion des Traktors überträgt, aufweist.

4. Traktor gemäß einem der Ansprüche 2 oder 3, **dadurch gekennzeichnet, dass** er starre Schutzvorrichtungen (7,8) für mindestens einen Antriebsriemen zum Antrieb der Schneidemittel aufweist.

5. Traktor gemäß einem der vorangegangenen Ansprüche, **dadurch gekennzeichnet, dass** er auswechselbare starre Schutzvorrichtungen (7,8) aufweist.

6. Traktor gemäß einem der vorangegangenen Ansprüche, **dadurch gekennzeichnet, dass** er starre Schutzvorrichtungen (7,8) aus Polypropylen aufweist.

7. Traktor gemäß einem der vorangegangenen Ansprüche, **dadurch gekennzeichnet, dass** er eine hinterseitige Schutzvorrichtung aufweist.

## Revendications

1. Tracteur de jardinage comprenant des protections rigides (7, 8) pour des parties mobiles, lesdites parties mobiles comprennent des composants mécaniques utiles pour déplacer le tracteur et les moyens de coupe de celui-ci, lesdites protections rigides (7, 8) comprennent des protections latérales (8) fixées sur le châssis de support (2) du tracteur et une protection avant (7) fixée en outre sur des leviers de soulèvement d'un corps de coupe permettant ainsi à ladite protection avant (7) de suivre le mouvement du corps de coupe (5), lesdites protections latérales (8) laissent libre le réglage en hauteur du corps de coupe (5), tout en assurant l'inaccessibilité de celui-cl.

2. Tracteur selon la revendication 1, **caractérisé en ce que** lesdits composants mobiles comprennent des composants de courroie entraînés.

3. Tracteur selon la revendication 2, **caractérisé en ce qu'**il comprend des protections rigides (7 - 8) pour au moins un mouvement de transmission de courroie d'entraînement vers l'unité de distribution pour la traction du tracteur.

4. Tracteur selon l'une quelconque des revendications 2 ou 3, **caractérisé en ce qu'**il comprend des protections rigides (7 - 8) pour au moins une courroie d'entraînement pour entraîner les moyens de coupe.

5. Tracteur selon l'une quelconque des revendications précédentes, **caractérisé en ce qu'**il comprend des protections rigides (7 - 8) remplaçables.

6. Tracteur selon l'une quelconque des revendications précédentes, **caractérisé en ce qu'**il comprend des protections rigides (7 - 8) en polypropylène.

7. Tracteur selon l'une quelconque des revendications précédentes, **caractérisé en ce qu'**il comprend une protection rigide arrière.
